# DEMANDE DE BREVET EUROPEEN

(11) **EP 4 632 862 A1**
(43) Date de publication de la demande: **15.10.2025**
(21) Numéro de dépôt: 24170080.6
(22) Date de dépôt: 12.04.2024
(51) Int. Cl.: H01M 10/0565, H01M 10/0567

(54) **ÉLECTROLYTE TERNAIRE**

(71) Demandeur: The Swatch Group Research and Development Ltd, 2074 Marin (CH)
(72) Inventeur: MONGELLUZZO, Joanna, 1630 Bulle (CH)
(74) Mandataire: ICB SA

(57) **Abrégé**

Un électrolyte ternaire comprenant entre 30 et 60 % en poids d'un premier oxyde de polyéthylène (PEO) et/ou d'un deuxième PEO et optionnellement du polyfluorure de vinylidène (PVDF), par rapport au poids total de l'électrolyte ternaire, mₑₗ₁, avec le PVDF présent au moins lorsque l'électrolyte ternaire ne comprend pas le premier PEO, ledit premier PEO ayant un premier poids moléculaire M_{w1} compris entre 0,75 * 10⁶ et 10 * 10⁶ g/mol, ledit deuxième PEO ayant un deuxième poids moléculaire M_{w2} compris entre 0,2 * 10⁶ et 0,7 * 10⁶ g/mol, et ledit PVDF ayant un troisième poids moléculaire M_{w3} compris entre 0,1 * 10⁶ et 1 * 10⁶ g/mol; entre 5 et 15 % en poids d'un sel d'un métal alcalin et entre 35 et 50 % en poids d'un liquide ionique, par rapport au mₑₗ₁ ; et entre 2,5 et 10 % en poids d'une charge inorganique par rapport au poids total des autres composants dans l'électrolyte ternaire, mₑₗ₂.

## Description

### Domaine technique de l'invention

La présente invention se rapporte à un électrolyte ternaire, particulièrement un électrolyte ternaire solide. La présente invention se rapporte également à une batterie comprenant ledit électrolyte ternaire, et à un procédé de production dudit électrolyte ternaire.

### Arrière-plan technologique

Les électrolytes solides sont depuis longtemps considérés comme alternatives pour des électrolytes liquides afin de résoudre les problèmes de sécurité de ces derniers. Selon la classification des composants, les électrolytes solides peuvent être divisés en trois catégories : les électrolytes inorganiques, les électrolytes organiques et les électrolytes organiques-inorganiques.

Un des avantages des électrolytes solides organiques est leur flexibilité qui permet un bon contact à l'interface électrode/électrolyte grâce à la nature souple des chaînes du polymère. Parmi les électrolytes solides organiques, les électrolytes polymère sec ont tiré l'intérêt du marché.

Les électrolytes polymère sec, également appelés des électrolytes binaires, comprennent une matrice polymère dans laquelle un composant solide, comme un sel de lithium, est dissout. La dissolution d'un sel de lithium (ou un sel de métal alcalin) dans l'hôte polymère conduit à la formation de la solution solide et modifie l'interaction du sel avec son hôte, tout en gardant la flexibilité des chaînes polymères. Néanmoins, ce type d'électrolyte solide présente une conductivité ionique du bulk assez faible à température ambiante (valeur entre 10⁻⁶ et 10⁻⁴ S/cm).

Des solutions connues pour améliorer la conductivité ionique à température ambiante incluent l'ajout de plastifiants liquides, de solvants organiques, et plus particulièrement de liquides ioniques, obtenant ainsi un électrolyte nommé électrolyte ternaire.

WO2020/096632 divulgue un électrolyte polymère ternaire comprenant un polymère, p. ex. du PEG-uréthane-diépoxy, un sel de lithium, p. ex. du LiTFSI ou du LiFSI, et un plastifiant, p. ex. du succinonitrile. L'électrolyte solide peut être utilisé dans des batteries du type Li-ion (LIBs), et démontre une conductivité ionique comprise entre 10⁻⁸ et 10⁻² S/cm.

Un désavantage de l'utilisation des plastifiants divulgués est que le procédé de fabrication de l'électrolyte polymère ternaire requiert de les fondre afin de pouvoir les manipuler. De plus, le succinonitrile est un composant hautement toxique.

EP4320668 divulgue un électrolyte polymère solide comprenant entre 20 et 70 % en poids d'un copolymère de fluorure de vinylidene (VDF) et d'un comonomère compatible avec le VDF, entre 10 et 80 % en poids d'un mélange d'un liquide ionique et d'un plastifiant, et entre 2 et 30 % en poids d'un sel de lithium, p. ex. du LiTFSI ou du LiFSI. L'électrolyte solide démontre une conductivité ionique comprise entre 10⁻⁵ et 5 * 10⁻³ S/cm.

Le plastifiant de cet électrolyte polymère solide est un solvant dans lequel le sel de lithium est dissout lors de la fabrication de l'électrolyte. En d'autres termes, la fabrication de cet électrolyte implique l'utilisation d'un solvant, malgré les préoccupations environnementales liées à l'utilisation de tels produits chimiques.

Un inconvénient des électrolytes polymères solides susmentionnés est que leur fabrication nécessite l'utilisation de produits chimiques très spécifiques et qui doivent être synthétisés, rendant ainsi ces méthodes complexes et coûteuses.

### Résumé de l'invention

L'invention a notamment pour objectif de pallier les différents inconvénients des électrolytes solides et des procédés de fabrication connus.

Plus précisément, un objectif de l'invention est de fournir un électrolyte ternaire, plus précisément un électrolyte ternaire solide, ou, autrement dit, un électrolyte polymère ternaire solide, ayant une excellente conductivité ionique à température ambiante. Un autre objectif est de fournir un électrolyte ternaire flexible.

Un autre objectif de l'invention est de fournir un procédé de fabrication d'un tel électrolyte ternaire (solide) qui permet d'utiliser des composants commercialement disponibles, rendant ainsi le procédé moins complexe et moins coûteux par rapport aux procédés connus dans l'art antérieur.

Un autre objectif de l'invention est de fournir un procédé de fabrication d'un électrolyte ternaire qui permet d'utiliser des composants ayant une faible toxicité, voire une toxicité négligeable, réduisant ainsi l'impact environnemental et les risques de santé liés au procédé de fabrication.

A cet effet, un premier aspect de la présente invention concerne un électrolyte ternaire selon les revendications annexées.

L'électrolyte ternaire comprend entre 30 et 60 % en poids d'un ou plusieurs polymères, entre 5 et 15 % en poids d'un sel d'un métal alcalin, et entre 35 et 50 % en poids d'un liquide ionique, le pourcentage en poids de chaque composant étant exprimé par rapport au poids total de l'électrolyte ternaire, mₑₗ₁.

L'électrolyte ternaire comprend en outre entre 2,5 et 10 % en poids d'une charge inorganique, par rapport au poids total des autres composants dans l'électrolyte ternaire, mₑₗ₂, dans lequel mₑₗ₁ = mₑₗ₂ + m_{ch}, où m_{ch} est le poids de la charge inorganique dans l'électrolyte ternaire, ou alors m_{ch} est comprise entre 0,025 * mₑₗ₂ et 0,10 * mₑₗ₂ et alors mₑₗ₁ est comprise entre 1,025 * mₑₗ₂ et 1,1 * mₑₗ₂. Les inventeurs ont découvert de manière surprenante que la présence d'un tel poids d'une charge inorganique permet d'obtenir un électrolyte ternaire solide qui est flexible.

Le ou les polymère(s) comprend/comprennent un premier oxyde de polyéthylène (PEO) et/ou un deuxième PEO et optionnellement du polyfluorure de vinylidène (PVDF) avec le PVDF présent au moins lorsque l'électrolyte ternaire ne comprend pas le premier PEO.

Le premier PEO a un premier poids moléculaire M_{w1} compris entre 0,75 * 10⁶ et 10 * 10⁶ g/mol, de préférence compris entre 1 * 10⁶ et 8 * 10⁶ g/mol, plus préférablement compris entre 2 * 10⁶ et 7 * 10⁶ g/mol, par exemple compris entre 4 * 10⁶ et 6 * 10⁶ g/mol.

Le deuxième PEO a un deuxième poids moléculaire M_{w2} compris entre 0,2 * 10⁶ et 0,7 * 10⁶ g/mol, de préférence compris entre 0,3 * 10⁶ et 0,6 * 10⁶ g/mol, plus préférablement compris entre 0,4 * 10⁶ et 0,6 * 10⁶ g/mol.

Le PDVF a un troisième poids moléculaire M_{w3} compris entre 0,1 * 10⁶ et 1 * 10⁶ g/mol, de préférence compris entre 0,2 * 10⁶ et 0,8 * 10⁶ g/mol, plus préférablement compris entre 0,3 * 10⁶ et 0,7 * 10⁶ g/mol, par exemple compris entre 0,4 * 10⁶ et 0,6 * 10⁶ g/mol.

Avantageusement, si l'électrolyte comprend le premier PEO et le deuxième PEO, la proportion en poids du premier PEO et du deuxième PEO est comprise entre 5:1 et 1:5, de préférence entre 3:1 et 1:3, plus préférablement entre 1:1 et 1:3.

Avantageusement, si l'électrolyte comprend le PVDF, la proportion en poids du ou des PEO(s) et PVDF est comprise entre 5:1 et 1:5, de préférence entre 3:1 et 1:3, plus préférablement entre 2:1 et 1:2, p. ex. 1:1.

Dans la présente divulgation, le terme « du ou des PEO(s) » fait référence aux PEOs dans une composition, par exemple l'électrolyte ou une pâte d'électrolyte, c'est-à-dire le premier PEO ou le deuxième PEO si la composition contient soit le premier PEO ou le deuxième PEO et pas les deux, ou le premier PEO et le deuxième PEO si la composition contient le premier PEO et le deuxième PEO.

Avantageusement, le métal alcalin est du lithium ou du sodium, de préférence du lithium. Quand le métal alcalin est du lithium, le sel de lithium comprend avantageusement du bis(trifluorométhanesulfonyl)imidure de lithium (LiTFSI) et/ou du bis(fluorosulfonyl)imidure de lithium (LiFSI).

Avantageusement, le liquide ionique comprend du bis(trifluorométhylsulfonyl)imidure de pyrrolidinium (Pyr_{1R}TFSI) et/ou du bis(fluorosulfonyl)imidure de pyrrolidinium (Pyr_{1R}FSI).

Avantageusement, la charge inorganique comprend une sépiolite modifiée avec du tocophérol. Avantageusement le tocophérol est du succinate de D-α-tocophérol polyéthylène glycol (TPGS) et la sépiolite modifiée avec du tocophérol est avantageusement une sépiolite modifiée avec du succinate de D-α-tocophérol polyéthylène glycol (TPGS-Sep).

Un deuxième aspect de la présente invention concerne une batterie selon les revendications annexées.

La batterie comprend l'électrolyte ternaire selon le premier aspect de la présente invention.

Avantageusement, la batterie est une batterie secondaire.

Avantageusement, la batterie (secondaire) est du type Li-ion, Na-ion, Li-métal polymère ou Na-métal polymère. Avantageusement, quand la batterie est du type Li-ion ou Li-métal polymère, le sel d'un métal alcalin de l'électrolyte est un sel de lithium. Similairement, et également avantageusement, quand la batterie est du type Na-ion ou Na-métal polymère, le sel d'un métal alcalin de l'électrolyte est un sel de sodium.

Un troisième aspect de la présente invention concerne un procédé de fabrication d'un électrolyte ternaire selon les revendications annexées. L'électrolyte ternaire fabriqué par le procédé est avantageusement un électrolyte ternaire selon le premier aspect de la présente invention.

Le procédé comprend la préparation d'une pâte d'électrolyte et la mise en forme de ladite pâte d'électrolyte pour obtenir l'électrolyte ternaire.

La pâte d'électrolyte comprend
- un premier PEO et/ou un deuxième PEO et optionnellement du PVDF avec le PVDF présent au moins lorsque la pâte d'électrolyte ne comprend pas le premier PEO, dans lequel le premier PEO, le deuxième PEO et le PVDF sont comme décrits ci-dessus,
- un sel d'un métal alcalin, comme décrit ci-dessus,
- un liquide ionique, comme décrit ci-dessus,
- une charge inorganique, comme décrite ci-dessus.

Le rapport molaire des unités oxyde d'éthylène (EO) du ou des PEO(s) et des ions du métal alcalin dans la pâte d'électrolyte est compris entre 5:1 et 30:1, de préférence entre 7:1 et 28:1, plus préférablement entre 10:1 et 25:1.

Avantageusement, quand le liquide ionique présent dans la pâte d'électrolyte comprend du bis(trifluorométhylsulfonyl)imidure de pyrrolidinium (Pyr_{1R}TFSI) et/ou du bis(fluorosulfonyl)imidure de pyrrolidinium (Pyr_{1R}FSI), le rapport molaire des unités Pyr_{1R}⁺ et des ions du métal alcalin dans la pâte d'électrolyte est compris entre 1:1 et 5:1, de préférence entre 2:1 et 4:1, plus préférablement entre 2,5:1 et 3,5:1.

Un avantage particulier de l'électrolyte ternaire selon la présente divulgation et de son procédé de fabrication est qu'il comprend des composants qui sont commercialement disponibles (en anglais : *off the shelf products*), et qui ne nécessitent donc pas leur propre synthèse en amont de la production (la fabrication) de l'électrolyte lui-même. De plus, ces produits commercialement disponibles ne sont pas (très) coûteux. Ceci rend le procédé de fabrication moins complexe et moins coûteux. Un autre avantage est l'absence de produits toxiques, tels que certains plastifiants utilisés dans l'art antérieur.

### Brève description des figures

Les buts, avantages et caractéristiques sont démontrés dans les figures suivantes, qui ne sont pas limitatives, et dans lesquelles :
- la figure 1A montre la morphologie de la surface d'un électrolyte selon l'invention obtenue par MEB,
- la figure 1B montre la morphologie de la coupe transversale du même électrolyte que la figure 1A, également obtenue par MEB,
- la figure 2 montre les analyses de la composition chimique pour les éléments F, Mg et O dans la coupe transversale de l'électrolyte des figures 1A et 1B, obtenues par EDX,
- la figure 3 montre les potentiels oxydatif et réducteur pour trois électrolytes selon l'invention,
- la figure 4 montre la fenêtre de stabilité dans lequel il n'y a pas d'oxydation ni de réduction, pour une électrolyte selon l'invention,
- la figure 5 montre les conductivités ioniques pour un électrolyte de référence et quatre électrolytes selon l'invention en fonction de la température.

### Description détaillée de l'invention

Avantageusement, le métal alcalin du sel d'un métal alcalin est du lithium ou du sodium, de préférence du lithium. Avantageusement, quand le métal alcalin est du lithium, le sel est un sel de lithium choisi parmi le groupe comprenant le LiTFSI, le LiFSI, le LiBOB, le LiPF₆, le LiBF₄, le LiClO₄, LiAsFe, LiN(CF₃SO₂)₂, LiC(CF₃SO₂)₃, LiDFOB, LiF, LiCl, LiBr, Lil, Li₂SO₄, LiNOs, Li₃PO₄, Li₂CO₃, LiOH, lithium acetate, lithium trifluoromethyl acetate, lithium oxalate.

L'électrolyte ternaire peut contenir un ou plusieurs sel(s) d'un métal alcalin. Quand l'électrolyte ternaire comprend deux ou plus sels d'un métal alcalin, le métal alcalin de chaque sel peut être le même ou différent. Par exemple, quand l'électrolyte ternaire comprend deux sels d'un métal alcalin, les sels peuvent être le LiTFSI et le LiFSI, dans lesquels le métal alcalin des deux sels est alors le même, étant du lithium.

Similairement, la pâte d'électrolyte peut contenir un ou plusieurs sel(s) d'un métal alcalin. Quand la pâte d'électrolyte comprend deux ou plus sels d'un métal alcalin, le métal alcalin de chaque sel peut être le même ou différent. Par exemple, quand la pâte d'électrolyte comprend deux sels d'un métal alcalin, les sels peuvent être le LiTFSI et le LiFSI, dans lesquels le métal alcalin des deux sels est alors le même, étant du lithium. Il va de soi que si la pâte d'électrolyte contient un ou plusieurs sel(s) d'un métal alcalin, alors l'électrolyte ternaire obtenu par le procédé selon l'invention contient également ce(s) sel(s) d'un métal alcalin.

Avantageusement, le liquide ionique est choisi parmi le group comprenant le Pyr_{1R}TFSI, le Pyr_{1R}FSI, le 1-ethyl-3-methylimidazolium bis(fluorosulfonyl)imide (EMIFSI) et le trihexyltetradecylphosphonium bis trifluoromethylsulfonyl amide. L'électrolyte ternaire solide peut contenir un ou plusieurs liquide(s) ionique(s), par exemple deux, trois ou quatre liquides ioniques. Similairement, la pâte d'électrolyte peut contenir un ou plusieurs liquide(s) ionique(s). Il va de soi que si la pâte d'électrolyte contient un ou plusieurs liquide(s) ionique(s), alors l'électrolyte ternaire obtenu par le procédé selon l'invention contient également ce(s) liquide(s) ionique(s). Des exemples non-limitatifs de mélanges de liquides ioniques incluent un mélange de Pyr_{1R}TFSI et de Pyr_{1R}FSI, un mélange d'EMIFSI et de Pyr_{1R}TFSI, ou bien un mélange d'EMIFSI et de Pyr_{1R}FSI.

Avantageusement, la charge inorganique apporte de la stabilité mécanique à l'électrolyte, tout en rendant l'électrolyte flexible. Avantageusement, la charge inorganique est choisie parmi le groupe comprenant des sépiolites modifiées avec du tocophérol, p. ex. une sépiolite modifiée avec du succinate de D-α-tocophérol polyéthylène glycol (TPGS-Sep), le dioxyde de silicium (SiO₂) et des minéraux argileux (anglais : clay minerais) comme p. ex. la montmorillonite et la halloysite naturelles. Il est connu que le succinate de D-α-tocophérol polyéthylène glycol (TPGS) et le TPGS-Sep sont souvent utilisés comme antioxydant du PEO, afin d'empêcher la dégradation du PEO, la dégradation incluant la formation de peroxydes au niveau des groupements méthylènes.

L'électrolyte ternaire solide peut contenir une ou plusieurs charge(s) inorganique(s), par exemple deux, trois ou quatre charges inorganiques. Similairement, la pâte d'électrolyte peut contenir une ou plusieurs charge(s) inorganique(s). Il va de soi que si la pâte d'électrolyte contient une ou plusieurs charge(s) inorganique(s), alors l'électrolyte ternaire obtenu par le procédé selon l'invention contient également cette(s) charge(s) inorganique(s).

Avantageusement, l'électrolyte selon l'invention a une conductivité ionique égale à ou au-dessus de 2 * 10⁻⁴ S/cm, de préférence au moins 2,5 * 10⁻⁴ S/cm, plus préférablement au moins 3 * 10⁻⁴ S/cm à température ambiante. La conductivité ionique est mesurée par spectroscopie d'impédance.

Avantageusement, l'électrolyte selon l'invention a une conductivité ionique égale à ou au-dessus de 5 * 10⁻⁴ S/cm, de préférence au moins 7,5 * 10⁻⁴ S/cm, plus préférablement au moins 1 * 10⁻³ S/cm à 50 °C.

Avantageusement, l'électrolyte selon l'invention a une conductivité ionique égale à ou au-dessus de 1 * 10⁻³ S/cm, de préférence au moins 1,5 * 10⁻³ S/cm, plus préférablement au moins 2 * 10⁻³ S/cm à 80 °C.

Avantageusement, la pâte d'électrolyte est préparée par des moyens connus dans l'art, p. ex. en mélangeant les composants afin d'obtenir une pâte homogène. Un avantage du procédé selon l'invention est que l'étape de préparation de la pâte d'électrolyte peut être exécutée à la température ambiante. Il est bien compris que la préparation de la pâte d'électrolyte peut être accélérée en chauffant les composants, par exemple en chauffant le conteneur dans lequel la pâte est préparée. Si un échauffement est choisi, les inventeurs ont découvert qu'une température légèrement au-dessus de la température ambiante suffit, p. ex. une température comprise entre 30 °C et 75 °C.

Selon un mode d'exécution particulier, la pâte est préparée en mélangeant la ou les charge(s) inorganique(s) avec le ou les PEO(s) et - si présent - le PVDF. Ensuite, le ou les sel(s) d'un métal alcalin est (sont) ajouté(s), tout en continuant de mélanger la composition, suivi par l'ajout du ou des liquide(s) ionique(s). Il est également possible d'ajouter le ou les sel(s) d'un métal alcalin et le ou les liquide(s) ionique(s) simultanément au mélange. Les inventeurs ont découvert qu'en ajoutant les composants dans cet ordre, il est plus facile d'obtenir une pâte d'électrolyte homogène.

Optionnellement, le procédé comprend en outre une étape d'homogénéisation de la pâte d'électrolyte avant de la mettre en forme. Cette étape optionnelle permet d'augmenter l'homogénéité de la pâte d'électrolyte. Il va de soi qu'une homogénéisation n'est pas nécessaire si la pâte préparée dans l'étape précédente démontre une homogénéité satisfaisante.

L'opération d'homogénéisation de la pâte d'électrolyte peut être exécutée par des moyens connus dans l'art. Avantageusement, la pâte est homogénéisée par un échauffement de la pâte, par exemple à une température comprise entre 30 °C et 120 °C, de préférence comprise entre 50 °C et 90 °C. Avantageusement, la température est sélectionnée en restant en dessous des températures de dégradation des composants de la pâte d'électrolyte, en particulier la température de dégradation de chaque PEO et - si présent - du PVDF, afin d'éviter toute dégradation de celle-ci.

Avantageusement, la pâte d'électrolyte est homogénéisée dans une atmosphère ayant une pression en dessous de la pression ambiante, autrement dit sous vide. Avantageusement, l'étape d'homogénéisation de la pâte d'électrolyte est réalisée sous vide à une température comprise entre 30 °C et 120 °C, de préférence comprise entre 50 °C et 90 °C.

Avantageusement, la mise en forme de la pâte d'électrolyte est réalisée par des moyens connus dans l'art. Un moyen compatible est en particulier la mise en forme par pression. Avantageusement, la mise en forme par pression comprend une opération de chauffage suivie d'une opération de pression et d'une étape de refroidissement.

Avantageusement, la pâte est chauffée à une température comprise entre 100 °C et 200 °C, de préférence comprise entre 125 °C et 175 °C, par exemple comprise entre 140 °C et 150 °C.

Avantageusement, la pression est faite en gardant la pâte à la température élevée. Avantageusement, la pression comprend l'application d'une pression comprise entre 2 kN et 50 kN, de préférence comprise entre 5 kN et 30 kN, plus préférablement comprise entre 10 kN et 25 kN, par exemple 15 kN ou 20 kN. Il va de soi que la pression dépend de la composition de la pâte, de sa viscosité, de la température et de l'épaisseur et/ou la forme d'électrolyte voulu(e)(s).

Avantageusement, l'opération de refroidissement inclut le maintien sous pression de la pâte en refroidissant. Le refroidissement durcit la pâte, formant ainsi l'électrolyte.

Un autre exemple d'un moyen de mise en forme compatible est l'extrusion. Avantageusement, l'extrusion comprend une opération de chauffage afin de fondre la pâte, suivie par une opération d'extrusion et une opération de refroidissement.

Avantageusement, la pâte est chauffée à une température comprise entre 125 °C et 200 °C, de préférence comprise entre 130 °C et 175 °C, par exemple comprise entre 140 °C et 150 °C, afin de fondre la pâte d'électrolyte.

Avantageusement, l'opération d'extrusion est réalisée en utilisant des moyens et paramètres connus dans l'art.

Avantageusement, l'opération de refroidissement inclut le maintien en forme (p. ex. dans la moule) de la pâte en refroidissant. Le refroidissement durcit la pâte, formant ainsi l'électrolyte.

### Exemples

### Exemple 1

Quatre pâtes d'électrolyte ayant les compositions 1-4 présentées au Tableau 1 ont été préparées. Premièrement, de la sépiolite modifiée avec du succinate de D-α-tocophérol polyéthylène glycol (*TPGS-Sep* dans le Tableau 1) et - si présent - un premier PEO (PEO 1), un deuxième PEO (PEO 2) et du PVDF, chaque composant dans leur quantité respective, sont mélangés. Par exemple, pour obtenir 100 g de l'électrolyte 4, une pâte de 100 g a été préparée en mélangeant 11,5 g du PEO 1, 11,5 g du PEO 2, 23,0 g du PVDF et 10,0 g de TPGS-Sep. Plus particulièrement, le premier PEO - si présent - a été ajouté au TPGS-Sep, suivi par le deuxième PEO et - si présent - le PVDF.

Le premier oxyde de polyéthylène (PEO) a un poids moléculaire de 5 * 10⁶ g/mol. Le deuxième PEO a un poids moléculaire de 0,6 * 10⁶ g/mol. Le poids moléculaire du PVDF était 0,534 * 10⁶ g/mol.

Ensuite, du LiTFSI ou du LiFSI a été ajouté comme sel de lithium, et du Pyr_{1R}TFSI ou du Pyr_{1R}FSI a été ajouté comme liquide ionique (IL dans le Tableau 1), tout en continuant de mélanger la pâte. Par exemple, pour 100 g de l'électrolyte 4, 7,8 g de LiTFSi et 46,0 g de liquide ionique ont été ajoutés au mélange des trois polymères et le TPGS-Sep. Le mélange a ensuite été mélangé jusqu'à l'obtention d'une pâte homogène.

Une fois une texture pâteuse et homogène obtenue, les mélanges ont été homogénéisés par chauffage à 90 °C sous vide pendant 48 h. Les pâtes d'électrolyte homogénéisées ont ensuite été converties en électrolytes en les chauffant à 140 °C pendant 15 minutes et ensuite en les pressant à cette température pendant 20 minutes sous une pression de 15 kN afin de les mettre en forme. Les pâtes ayant été mises en forme ont ensuite été refroidies en maintenant la pression de 15 kN, ce qui permet aux pâtes de durcir afin d'obtenir les électrolytes sous forme de disques. Les électrolytes fabriqués avaient la forme d'un film autoportant et semi-transparent.

Un électrolyte de référence a également été fabriqué en mélangeant du PEO 2 avec du LiTFSI dans les quantités relatives mentionnées dans le Tableau 1. Cet électrolyte a été fabriqué selon le même procédé des quatre électrolytes inventifs.

**Tableau 1 : composition des électrolytes fabriqués (en % en poids par rapport au poids total de l'électrolyte ternaire)**

| **Electrolyte** | **PEO 1** | **PEO 2** | **PVDF** | **Li(T)FSI** | **IL** | **TPGS-Sep** |
|---|---|---|---|---|---|---|
| Référence | - | 75,0 | - | 25,0 | - | - |
| 1 | - | 46,0 | - | 12,0 | 42,0 | 10,0 |
| 2 | 11,5 | 34,5 | - | 12,0 | 42,0 | 10,0 |
| 3 | - | 23,0 | 23,0 | 7,8 | 46,2 | 10,0 |
| 4 | 11,5 | 11,5 | 23,0 | 7,8 | 46,2 | 10,0 |

La morphologie de la surface et la morphologie de la coupe transversale des électrolytes, la composition chimique et l'homogénéité du bulk et de la surface des électrolytes ont été examinées par microscopie électronique à balayage (MEB) couplée à la spectrométrie de dispersion d'énergie (EDX).

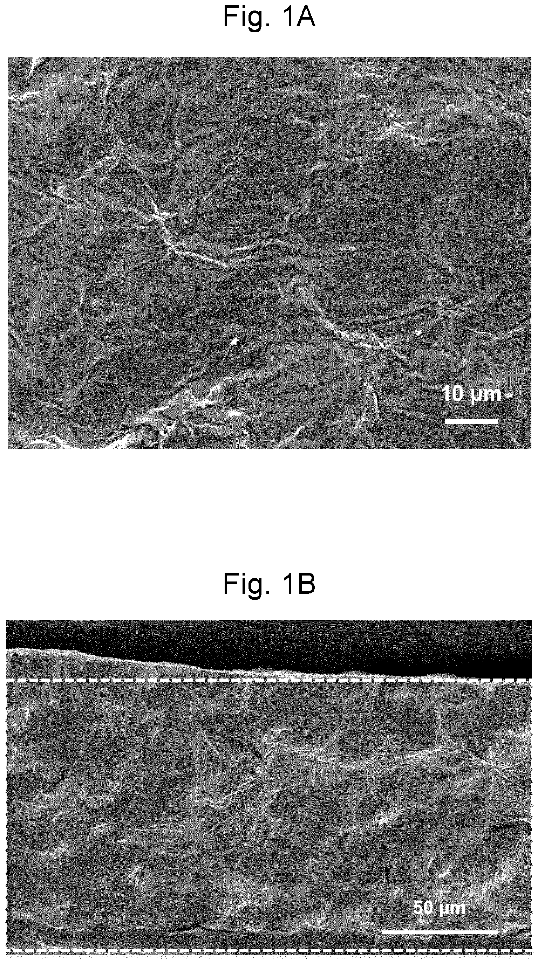

La Figure 1A montre la morphologie de la surface de l'électrolyte 1, et la figure 1B montre la morphologie de la coupe transversale du même électrolyte 1 obtenues par MEB. Il est clair que la surface et la coupe transversale démontrent une morphologie très homogène.

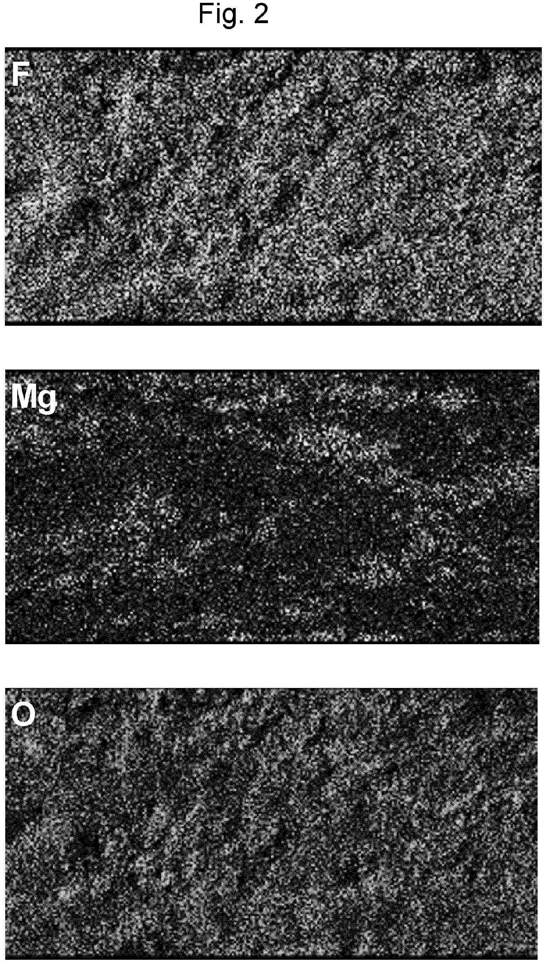

La Figure 2 montre les analyses de la composition chimique pour les éléments F, Mg et O dans la coupe transversale du même électrolyte 1, obtenues par EDX. Il est clair que leur dispersion dans la coupe transversale est très homogène.

### Exemple 2

Afin de mesurer la fenêtre de stabilité électrochimique, des piles bouton à deux électrodes ont été préparées avec les quatre électrolytes inventifs (électrodes 1-4 du Tableau 1). Les électrodes étaient une électrode en lithium métal et une électrode en acier inoxydable. Chaque pile bouton - donc chaque électrolyte - a été testé entre deux plages de potentiel : entre le potentiel de circuit ouvert (OCP) et 50 mV (plage de potentiel faible), et entre OCP et 5,2 V (plage de potentiel élevé) à une vitesse de 1 mV/s en utilisant un cycleur de batterie Biologie.

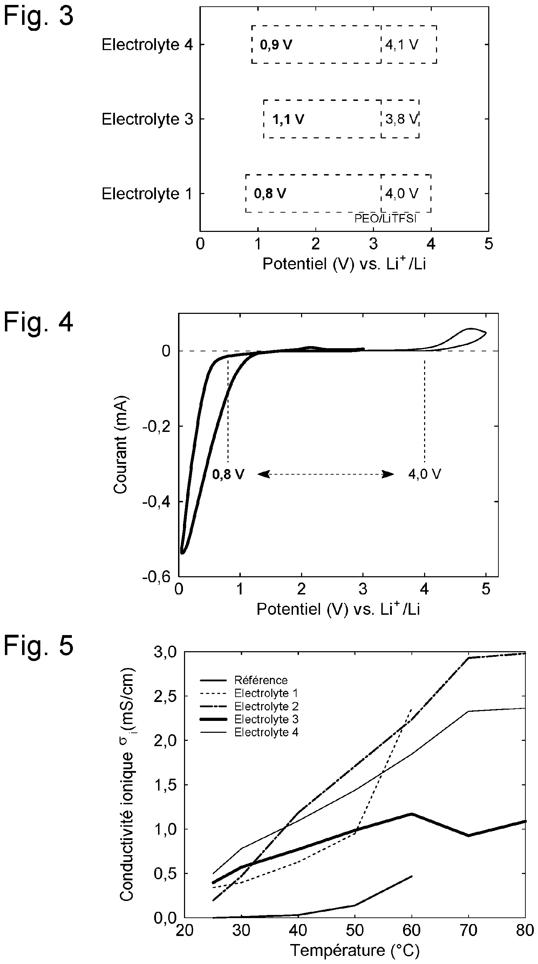

La figure 3 montre les potentiels oxydatif et réducteur pour les électrolytes 1, 3 et 4. Le résultat pour la pile bouton comprenant l'électrolyte 2 était très similaire au résultat pour l'électrolyte 1. Il est clair que chaque électrolyte inventif commence à s'oxyder à un potentiel bien au-dessus de 3,2 V, une valeur souvent mentionnée dans la littérature pour les électrolytes binaires classiques à base du PEO 2.

La figure 4 montre la fenêtre de stabilité (dans lequel il n'y a pas d'oxydation ni de réduction) pour l'électrolyte 1, indiquant un comportement stable (ni d'oxydation, ni de réduction, ou un courant de 0 mA (axe Y de la Figure 4)) entre un potentiel de 0,8 V et 4,0 V.

### Exemple 3

Afin de mesurer la conductivité ionique, une cellule symétrique a été fabriquée avec chaque électrolyte du Tableau 1, y compris l'électrolyte de référence. Les électrodes utilisées étaient en acier inoxydables. L'évolution de la résistance de l'électrolyte a été suivie pendant deux cycles de chauffage-refroidissement au cours desquels la température a été variée entre 25 °C et 60 °C pour la cellule comprenant l'électrolyte de référence, et entre 25 °C et 80 °C pour les cellules comprenant un électrolyte inventif. Les spectres d'impédance électrochimique ont été enregistrés dans une gamme de fréquences de 7,0 MHz à 50 mHz avec une amplitude de signal de 10 mV. La conductivité ionique est calculée en divisant l'épaisseur du film d'électrolyte par le produit de la surface géométrique et la résistance de l'électrolyte.

La figure 5 montre les conductivités ioniques obtenues. Il est clair que la conductivité ionique à chaque température testée, et en particulier à température ambiante, de tous les électrolytes ternaires inventifs dépasse largement celle du système de référence.

## Revendications

1. Un électrolyte ternaire comprenant
- entre 30 et 60 % en poids d'un premier oxyde de polyéthylène (PEO) et/ou d'un deuxième PEO et optionnellement du polyfluorure de vinylidène (PVDF), par rapport au poids total de l'électrolyte ternaire, mₑₗ₁, avec le PVDF présent au moins lorsque l'électrolyte ternaire ne comprend pas le premier PEO, ledit premier PEO ayant un premier poids moléculaire M_{w1}, ledit deuxième PEO ayant un deuxième poids moléculaire M_{w2}, et ledit PVDF ayant un troisième poids moléculaire M_{w3},
- entre 5 et 15 % en poids d'un sel d'un métal alcalin par rapport à mₑₗ₁, et
- entre 35 et 50 % en poids d'un liquide ionique, par rapport à mₑₗ₁,
**caractérisé en ce que** M_{w1} est compris entre 0,75 * 10⁶ et 10 * 10⁶ g/mol, M_{w2} est compris entre 0,2 * 10⁶ et 0,7 * 10⁶ g/mol et M_{w3} est compris entre 0,1 * 10⁶ et 1 * 10⁶ g/mol, et **en ce que** l'électrolyte ternaire comprend en outre entre 2,5 et 10 % en poids d'une charge inorganique par rapport au poids total des autres composants dans l'électrolyte ternaire, mₑₗ₂.

2. L'électrolyte ternaire selon la revendication 1, dans lequel M_{w1} est compris entre 1 * 10⁶ et 8 * 10⁶ g/mol.

3. L'électrolyte ternaire selon l'une quelconque des revendications précédentes, dans lequel M_{w2} est compris entre 0,3 * 10⁶ et 0,6 * 10⁶ g/mol.

4. L'électrolyte ternaire selon l'une quelconque des revendications précédentes, dans lequel M_{w3} est compris entre 0,3 * 10⁶ et 0,7 * 10⁶ g/mol.

5. L'électrolyte ternaire selon l'une quelconque des revendications précédentes, dans lequel l'électrolyte comprend le premier PEO et le deuxième PEO, et dans lequel la proportion en poids du premier PEO et du deuxième PEO est comprise entre 5:1 et 1:5.

6. L'électrolyte ternaire selon l'une quelconque des revendications précédentes, dans lequel l'électrolyte comprend le PVDF, et dans lequel la proportion en poids du ou des PEO(s) et PVDF est comprise entre 5:1 et 1:5.

7. L'électrolyte ternaire selon l'une quelconque des revendications précédentes, dans lequel le sel d'un métal alcalin comprend du bis(trifluorométhanesulfonyl)imidure de lithium (LiTFSI) et/ou du bis(fluorosulfonyl)imidure de lithium (LiFSI).

8. L'électrolyte ternaire selon l'une quelconque des revendications précédentes, dans lequel le liquide ionique comprend du bis(trifluorométhylsulfonyl)imidure de pyrrolidinium (Pyr_{1R}TFSI) et/ou du bis(fluorosulfonyl)imidure de pyrrolidinium (Pyr_{1R}FSI).

9. L'électrolyte ternaire selon l'une quelconque des revendications précédentes, dans lequel la charge inorganique comprend une sépiolite modifiée avec du tocophérol, de préférence une sépiolite modifiée avec du succinate de D-α-tocophérol polyéthylène glycol (TPGS-Sep).

10. Une batterie comprenant l'électrolyte ternaire selon l'une quelconque des revendications précédentes.

11. La batterie selon la revendication 10, dans laquelle la batterie est une batterie du type Li-ion, Na-ion ou Li-métal polymère.

12. Procédé de fabrication d'un électrolyte ternaire, comprenant les étapes de :
- préparer une pâte d'électrolyte comprenant :
• un premier PEO et/ou un deuxième PEO et optionnellement du PVDF avec le PVDF présent au moins lorsque la pâte d'électrolyte ne comprend pas le premier PEO, ledit premier PEO ayant un premier poids moléculaire M_{w1}, ledit deuxième PEO ayant un deuxième poids moléculaire M_{w2}, et ledit PVDF ayant un troisième poids moléculaire M_{w3},
• un sel d'un métal alcalin,
• un liquide ionique, et
• une charge inorganique,
- mettre en forme la pâte d'électrolyte pour obtenir l'électrolyte ternaire,
**caractérisé en ce que** M_{w1} est compris entre 0,75 * 10⁶ et 10 * 10⁶ g/mol, M_{w2} est compris entre 0,2 * 10⁶ et 0,7 * 10⁶ g/mol et M_{w3} est compris entre 0,1 * 10⁶ et 1 * 10⁶ g/mol, et **en ce que** le rapport molaire des unités oxyde d'éthylène (EO) du ou des PEO(s) et des ions du métal alcalin dans la pâte d'électrolyte est compris entre 5:1 et 30:1, de préférence entre 10:1 et 25:1.

13. Le procédé selon la revendication 12, dans lequel le sel d'un métal alcalin comprend du bis(trifluorométhanesulfonyl)imidure de lithium (LiTFSI) et/ou du bis(fluorosulfonyl)imidure de lithium (LiFSI).

14. Le procédé selon l'une quelconque des revendications 12 à 13, dans lequel le liquide ionique comprend du bis(trifluorométhylsulfonyl)imidure de pyrrolidinium (Pyr_{1R}TFSI) et/ou du bis(fluorosulfonyl)imidure de pyrrolidinium (Pyr_{1R}FSI).

15. Le procédé selon la revendication 14, dans lequel le rapport molaire des unités Pyr_{1R}⁺ et des ions du métal alcalin dans la pâte d'électrolyte est compris entre 1:1 et 5:1, de préférence entre 2:1 et 4:1.
